# FASCICULE DE BREVET EUROPEEN

(11) **EP 2 144 105 B1**
(45) Date de publication et mention de la délivrance du brevet: **20.04.2016**
(21) Numéro de dépôt: 09164058.1
(22) Date de dépôt: 29.06.2009
(51) Int. Cl.: G02B 7/18, G02B 7/183, G02B 26/08

(54) **Dispositif de correction des défauts optiques d'un miroir de télescope**
Vorrichtung zum Korrigieren der optischen Fehler eines Teleskopspiegels
Device for correcting optical faults in a telescope mirror

(30) Priorité: 11.07.2008 FR 0803980
(43) Date de publication de la demande: 13.01.2010
(73) Titulaire: THALES, 92200 Neuilly-sur-Seine (FR)
(72) Inventeur: Devilliers, Christophe, 06130 Grasse (FR); Lasic, Thierry, 06210 Mandelieu (FR)
(74) Mandataire: Esselin, Sophie

(56) Documents cités:
- EP-A- 1 890 177
- WO-A-2005/026801
- WO-A2-03/036359
- DE-A1-102005 062 401
- FR-A- 2 773 890
- US-A- 4 226 507
- US-A1- 2004 085 657
- US-B1- 6 386 714

## Description

La présente invention se rapporte à un dispositif de modification de forme et en particulier de correction de forme, d'une surface optique telle qu'un miroir de télescope ou toute autre surface rigide comme par exemple un réflecteur, ainsi qu'à un miroir ainsi équipé.

Le domaine de l'invention est en particulier, mais non exclusivement, celui des miroirs de télescopes et plus particulièrement des miroirs de télescopes spatiaux. Ces dernières années, de nouveaux concepts ont été développés permettant de réaliser de nouvelles fonctions optiques. On citera, par exemple, le déploiement de télescopes allégés dans l'espace, la réalisation de télescopes de grands diamètres à partir de miroirs segmentés, la mise en place de télescopes jumelés permettant la synthèse d'ouverture ou la réalisation de grands interféromètres.

Bien entendu, les aberrations et les défauts optiques de ces télescopes doivent être parfaitement connus et maîtrisés de façon à conserver une qualité d'image parfaite. En particulier, l'astigmatisme des miroirs et/ou le rayon de courbure doit être connu et corrigé. D'une façon simple, un miroir est dit astigmate lorsqu'il présente dans deux plans de coupe orthogonaux passant par son centre deux rayons de courbure différents. Il existe différentes techniques permettant le contrôle de l'astigmatisme. On peut utiliser, par exemple, un dispositif de contrôle actif permettant de modifier la forme d'une pluralité de miroirs secondaires constituant un miroir principal. Ces dispositifs ne sont pas qualifiés pour des applications spatiales, sont très lourds, leur fiabilité est limitée et leur MTBF (temps moyen entre deux pannes) est relativement faible.

La présente invention a pour objet un dispositif de modification de forme d'une surface optique, et en particulier de correction des défauts optiques d'un miroir de télescope, dispositif qui soit simple à mettre en oeuvre et le moins onéreux possible, qui permette de corriger l'astigmatisme d'un tel miroir ainsi que, de façon indépendante, le rayon de courbure et l'astigmatisme d'un tel miroir et qui soit compatible d'une utilisation en environnement spatial, où les critères de poids, de fiabilité, de durée de vie, de coût et de tenue aux températures extrêmes fondamentaux.

Le dispositif de modification de forme d'une surface optique conforme à l'invention est défini par la revendication 1.

Selon une application préférée de l'invention, la surface optique est un miroir de télescope, et le dispositif de modification est un dispositif de correction des défauts optiques de ce miroir.

Selon une autre caractéristique de l'invention, afin de piloter de façon indépendante le rayon de courbure et l'astigmatisme du miroir, le dispositif comporte une structure mécanique composée de deux éléments à longueur pilotable, et ce de manière indépendante, des moyens de contrôle de la longueur de ces deux éléments, ces deux éléments étant disposés à 90° l'un part rapport à l'autre et étant reliés au miroir par leurs extrémités en des zones diamétralement ou diagonalement opposées et proches de la périphérie de ce miroir, la liaison entre les éléments à longueur pilotable et le miroir comportant des fixations rigides selon l'axe joignant ces deux zones de fixation et flexibles selon les autres degrés de liberté. Les deux éléments peuvent soit être fixés l'un à l'autre en leur milieu, soit libres entre eux.

Selon une autre caractéristique de l'invention, afin de piloter de façon indépendante l'astigmatisme du miroir sans modifier le rayon de courbure, le dispositif comporte une structure mécanique composée de quatre poutres sensiblement identiques disposées en parallélogramme et reliées entre elles par des articulations, deux des sommets du parallélogramme étant solidaires des extrémités de la poutre, les deux autres sommets étant solidaires de la face arrière du miroir par deux pivots.

Le dispositif de correction selon l'invention permet de résoudre les inconvénients précités. Son principe de fonctionnement est le suivant : une poutre droite réalisée dans le même matériau que le miroir est fixée sur sa face arrière en limitant ses degrés de liberté. En changeant la longueur de la poutre avec des moyens appropriés, l'allongement de la poutre provoque au niveau des points de fixation des forces radiales. Ces forces étant appliquées à une certaine distance du centre d'inertie du miroir, elles induisent un moment tangentiel qui, à son tour, modifie de façon contrôlée l'astigmatisme du miroir selon la direction de la poutre.

Avantageusement, les moyens de contrôle comprennent des moyens pour modifier la température de la poutre par rapport à celle du miroir, entraînant une modification de la longueur de la poutre par dilatation ou compression.

Une variante de l'invention consiste à utiliser une poutre constituée d'au moins deux demi-poutres sensiblement identiques réunies par un ensemble mécanique comportant les moyens de contrôle, lesdits moyens de contrôle étant des dispositifs piézoélectriques ou à base d'actuateurs thermiques. Dans le cas d'utilisation de moyens piézoélectriques, l'ensemble mécanique peut comporter au moins un pantographe mécanique à quatre sommets réalisé au moyen de quatre lames identiques, le premier sommet relié à la première demi-poutre, le troisième sommet à la seconde demi-poutre, les second et quatrième sommets reliés à un dispositif piézoélectrique. Plus précisément, l'ensemble mécanique peut comporter quatre pantographes identiques parallèles entre eux et reliés aux deux demi-poutres.

Avantageusement, les moyens de fixation sont des bipieds isostatiques comprenant deux lames flexibles disposées en forme de A constituant une structure dite « A-frame », les lames étant solidaires d'une part de la poutre et d'autre part de la face arrière du miroir.

Dans un mode de réalisation particulier, les moyens de correction comprennent également une structure mécanique composée de quatre poutres sensiblement identiques disposées en parallélogramme et reliées entre elles par des articulations, deux des sommets du parallélogramme étant solidaires des extrémités de la poutre, les deux autres sommets étant solidaires de la face arrière du miroir par des pivots.

Préférentiellement, la poutre ou les demi-poutres ou les poutres ont sensiblement la forme de parallélépipède rectangle et sont réalisées dans le même matériau que le miroir, ce matériau pouvant être une structure composite matricielle à base de carbure de silicium connue sous la marque « Cesic^{®} », les bipieds et les pivots étant réalisés en Invar.

La présente invention sera mieux comprise à la lecture de la description détaillée d'un mode de réalisation, pris à titre d'exemple non limitatif et illustré par le dessin annexé, sur lequel :
Les figures 1 et 2 représentent en vue de face et en vue de dessus un miroir doté des moyens de contrôle selon l'invention ;
La figure 3 représente en détail la fixation de la poutre sur la face arrière du miroir des figures 1 et 2;
La figure 4 est une vue en perspective d'un premier mode de réalisation des moyens de contrôle conformes à l'invention ;
La figure 5 est une vue en perspective d'un second mode de réalisation des moyens de contrôle conformes à l'invention ;
La figure 6 représente le détail des moyens de contrôle de ce second mode de réalisation ;
La figure 7 est une vue de dessus d'une variante de réalisation du dispositif de l'invention comportant une structure mécanique en forme de parallélogramme ;
La figure 8 est une vue en perspective de la variante de réalisation de la figure 7; et
Les figures 9 et 10 sont des vues de détail de la figure 8,
Les figures 11 et 12 sont respectivement un schéma de principe d'une variante du dispositif de l'invention permettant de modifier indépendamment le rayon de courbure et l'astigmatisme d'un miroir, et une vue en perspective d'un mode de réalisation des poutres pouvant être utilisées dans cette variante, et
Les figures 13 à 15 sont des schémas simplifiés de différents modes de réalisation des dispositifs « thermiques-athermiques » de contrôle de la longueur des poutres du dispositif de l'invention.

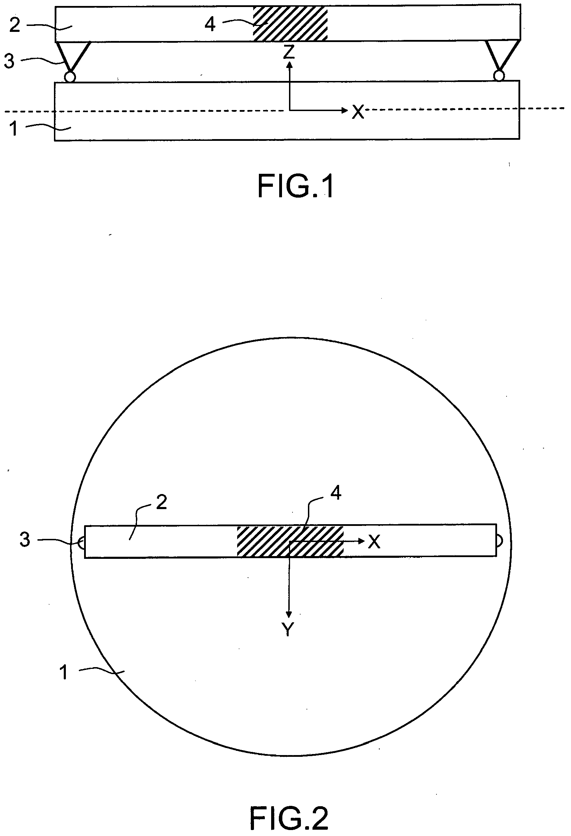

Le principe du dispositif selon l'invention est illustré par les figures 1 et 2. La figure 1 est une vue de face du dispositif et la figure 2 une vue de dessus. Sur ces figures et les suivantes, le miroir représenté est un miroir plan circulaire. Bien entendu, le dispositif selon l'invention peut s'adapter à tous types de miroirs (concaves ou convexes) et à toute forme (hexagonale, carrée, rectangulaire,...).

Dans la version de base du dispositif de l'invention, les moyens de correction de l'astigmatisme sont disposés sur la face arrière du miroir 1 et comprennent au moins une poutre 2 de longueur sensiblement égale à une des dimensions principales du miroir (qui est le diamètre si le miroir est circulaire). La direction de la poutre 2 est celle selon laquelle on veut modifier l'astigmatisme du miroir. La poutre 2 comporte, à ses extrémités, des moyens de fixation 3 sur la face arrière du miroir. Des moyens de contrôle 4 permettent de modifier la longueur de la poutre 2 de façon déterminée. Ils sont représentés par une zone hachurée sur les figures 1 et 2.

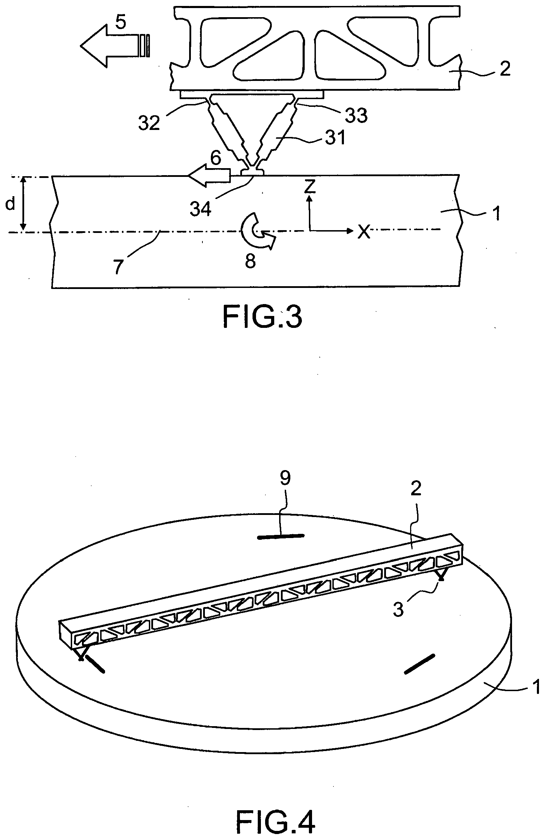

Plus précisément, les moyens de fixation 3 sont des bipieds comprenant deux lames flexibles 31 disposées en forme de A inversé (voir figure 3 ) et constituant une structure flexible dite « A-frame », les lames étant solidaires d'une part de la poutre en deux points 32 et 33 et d'autre part de la face arrière du miroir en un troisième point 34, commun aux deux lames 31. Cette structure est rigide dans deux directions de l'espace (directions X et Z dans le plan de la figure 3) et souple dans la troisième direction de l'espace (axe Y sur la figure 2), la rotation étant souple autour du troisième point de fixation (fixation sur le miroir) selon les trois axes de rotation.

Le principe de fonctionnement est illustré en figure 3. Lorsque la poutre subit une variation de longueur (élongation ou contraction, mais dans la suite du texte, il sera surtout question d'élongation, étant bien entendu qu'il peut également s'agir de contraction), et dans le cas présent une élongation représentée par une flèche 5, cette élongation génère au point de fixation sur le miroir une force F représentée par une flèche 6, force qui est fonction de l'élongation et des différents paramètres mécaniques de la structure flexible de fixation en « A-Frame ». A l'intérieur du miroir 1, il existe un plan dit « plan neutre » 7 qui, lorsque des efforts sont exercés sur le miroir dans ce plan, ce miroir ne subit aucune flexion, à l'inverse un effort situé dans un plan parallèle à ce plan va induire une flexion du miroir. Si on note d la distance du point de fixation au plan neutre, la force 6 exerce sur le miroir un moment mécanique 8 égal au produit F.d qui entraîne la déformation du miroir. La force F et la distance d peuvent être connues avec une grande précision soit par calcul soit par calibration. On peut donc déterminer de façon précise, pour une élongation connue, le moment appliqué au miroir et par conséquent, la déformation entraînée. Il est ainsi possible, en ajustant les différents paramètres disponibles (positionnement et caractéristiques des moyens de fixation, élongations appliquées), de déterminer la loi de déformation du miroir en vue d'obtenir la correction souhaitée. L'invention est décrite ici pour introduire sciemment et de façon contrôlée une variation de forme de la surface optique du miroir (changement du rayon de courbure et/ou changement de l'astigmatisme) mais il est bien entendu qu'elle peut être mise en oeuvre, dans certains cas, pour la correction de défauts optiques d'un miroir (notamment adaptation très précise du rayon de courbure du miroir), et par conséquent, il n'est question dans la présente description que de correction de défauts, sachant que ce terme s'applique aussi bien à l'introduction volontaire de déformations spécifiques.

La figure 4 représente un exemple de réalisation du miroir 1 et de la poutre 2 selon l'invention. Il est très important que la poutre et le miroir soient réalisés dans le même matériau de façon à éviter les dilatations différentielles dues aux variations thermiques qui risqueraient de provoquer des élongations parasites. Sur cette figure, le miroir 1 est circulaire et la poutre 2 a une forme parallélépipédique. Bien entendu, d'autres formes géométriques sont possibles. Le matériau commun peut être, par exemple, une structure composite matricielle connue sous la marque « Cesic^{®} » et commercialisé notamment par la société ECM. Ce matériau a comme caractéristiques principales d'avoir une grande raideur, une conductivité thermique importante, un coefficient de dilatation faible, une densité faible et un coût de réalisation relativement bas. Il est idéal pour la réalisation des miroirs des grands télescopes spatiaux. Le matériau de base est la fibre de carbone imprégnée de résine, le tout étant transformé en carbure de silicium par réaction avec du silicium. La maille matricielle est typiquement de forme hexagonale. Sur la figure 4, les trois traits épais disposés en triangle à la périphérie du miroir représentent le système d'accrochage 9 isostatique du miroir qui est intégré à la structure.

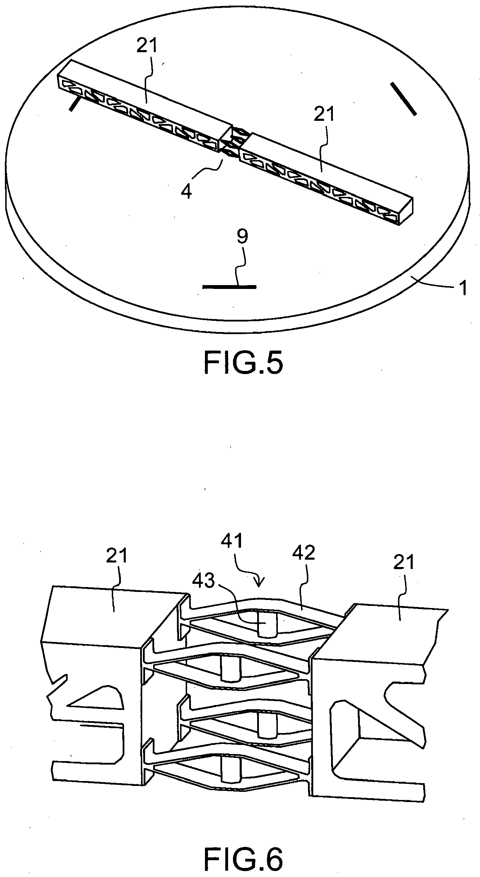

Il existe différents moyens permettant de modifier la longueur de la poutre. Il est possible d'utiliser des éléments chauffants disposés sur la poutre, la dilatation thermique entraînant l'élongation. Une autre possibilité (représentée sur les figures 5 et 6) consiste en l'ajout d'un élément thermo élastiquement contrôlé entre deux parties de la longueur de la poutre assurant la variation de longueur (dilatation ou compression) de cet élément par des éléments chauffants situé sur différentes parties de cet élément.

La figure 6 est une vue de détail des moyens de contrôle représentés au centre de la figure 5. Sur ces figures, la poutre est constituée d'au moins deux demi-poutres 21 sensiblement identiques réunies par un ensemble mécanique central 4 comportant des dispositifs piézoélectriques comme moyens de contrôle.

Come indiqué sur la figure 6, les moyens de contrôle 4 comportent un ensemble mécanique constitué de quatre pantographes 41 identiques, parallèles entre eux et reliés aux deux demi-poutres 21. Les pantographes sont disposés en carré. Chaque pantographe mécanique est réalisé au moyen de quatre lames identiques 42 et comporte quatre sommets, le premier sommet relié à la première demi-poutre, le troisième sommet à la seconde demi-poutre, les second et quatrième sommets reliés à un dispositif piézoélectrique 43 dont la hauteur est commandée électriquement. Les lames sont préférentiellement réalisées en invar. Cette configuration a plusieurs avantages. Ce système évite que les empilements composant les ensembles piézoélectriques soient directement soumis à des forces de cisaillement. D'autre part, il permet de démultiplier l'effet piézoélectrique, augmentant ainsi l'amplitude d'élongation des poutres. Bien entendu, la configuration décrite sur ces figures 5 et 6 peut subir de nombreuses variantes tant dans la disposition des pantographes que dans leur agencement tout en conservant le même principe mécanique.

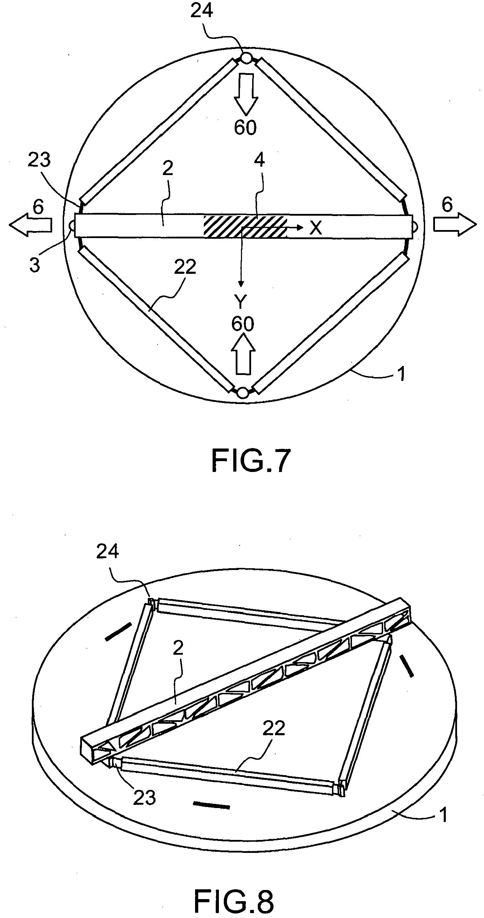

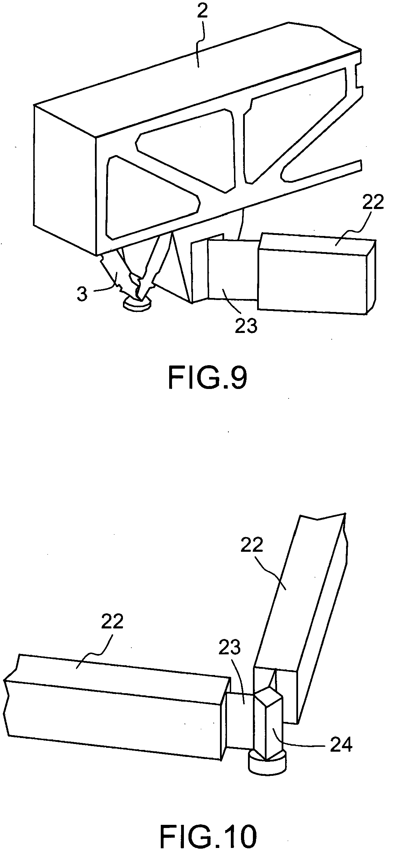

Le système comportant une poutre ou un ensemble de demi-poutres a l'avantage de la simplicité. Il permet d'introduire un astigmatisme pur et parfaitement contrôlé. Cependant, il peut entraîner une certaine défocalisation. Aussi, ce système peut être avantageusement complété par une seconde structure mécanique en forme de parallélogramme destinée à corriger ce défaut, et permettant de piloter de façon indépendante l'astigmatisme et le rayon de courbure du miroir. Cette structure est décrite sur les figures 7 à 10, la figure 7 étant une vue de dessus du miroir comportant ladite structure mécanique, la figure 8 étant une vue tridimensionnelle de cette structure et les figures 9 et 10 étant des vues de détail de la structure de la figure 8.

Comme indiqué sur la figure 8, la structure mécanique ajoutée est composée de quatre poutres 22 sensiblement identiques disposées en parallélogramme et reliées entre elles par des articulations 23 (traits noirs épais de la figure 7), deux des sommets du parallélogramme étant solidaires des extrémités de la poutre, les deux autres sommets étant solidaires de la face arrière du miroir par des pivots 24.

Lorsque la poutre centrale 2 s'allonge, l'élongation résultante génère aux points de fixation sur le miroir des forces 6 antagonistes représentées par deux flèches blanches opposées et orientées vers l'extérieur du miroir (axe X de la figure 8), forces qui sont fonction de l'élongation et des différents paramètres mécaniques de la structure flexible de fixation en « A-Frame ». Les quatre extrémités des poutres solidaires de la poutre accompagnent cet allongement. Par conséquent, les quatre autres extrémités « tirent » sur les deux pivots. Sur chaque pivot, les forces 60 résultantes sont antagonistes, orientées vers l'intérieur du miroir et perpendiculaires à la direction des forces 6 exercées par la poutre (axe Y de la figure 8). Ainsi, si la poutre 2 provoque une variation de courbure sur le miroir dans un premier sens, les poutres 22 provoquent une variation de courbure dans le sens opposé. On obtient ainsi une variation d'astigmatisme « pur », sans défocalisation parasite.

La figure 8 montre un exemple de réalisation de ce dispositif en vue en perspective. Dans cet exemple, le miroir 1, la poutre principale 2 et les poutres 22 sont en CESIC. Les différents pivots 24, articulations 23 et moyens de fixation 3 reliant les éléments 2 et 22 entre eux et au miroir 1 sont en invar.

La figure 9 montre le détail du dispositif d'articulation des poutres à la poutre centrale. Chaque articulation est essentiellement constituée par une lame plane flexible 23 en invar perpendiculaire à la face arrière du miroir et reliée d'une part à une extrémité de la poutre 2 et d'autre part à une extrémité de la poutre 22.

La figure 10 montre le détail du dispositif d'articulation des poutres 22 autour des pivots de fixation 24. Chaque articulation est également essentiellement constituée par une lame plane flexible 23 en invar perpendiculaire à la face arrière du miroir et reliée d'une part à une extrémité de la poutre 22 et d'autre part au pivot 24.

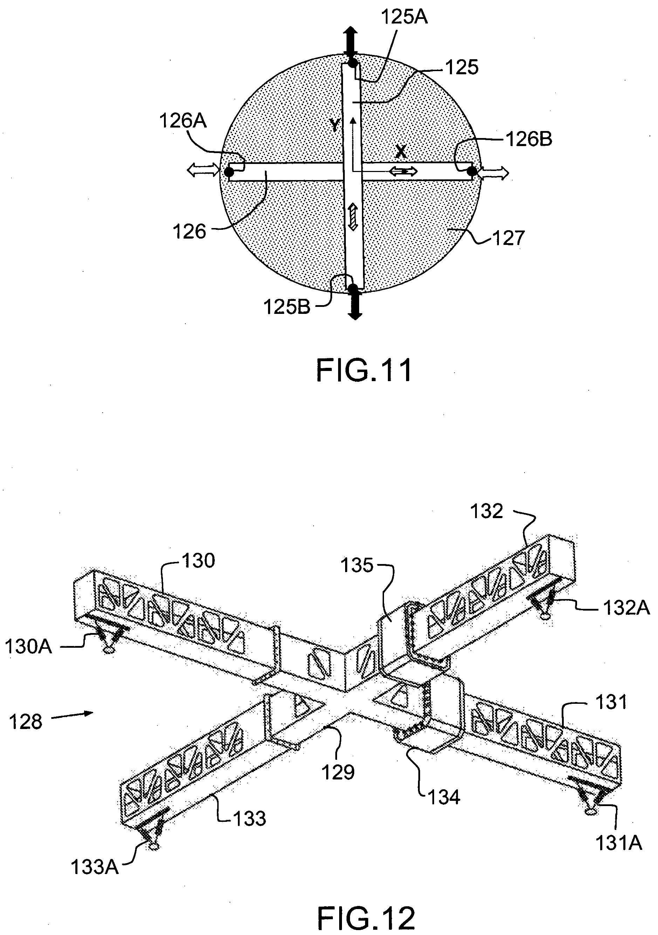

On a schématisé en figure 11 une variante du dispositif de l'invention permettant de corriger ou modifier indépendamment l'astigmatisme et le rayon de courbure à l'aide de deux poutres du type décrit ci-dessus, un exemple de réalisation des poutres utilisées dans cette variante étant représenté en figure 12.

Les deux poutres 125, 126, de même longueur, sont orthogonales entre elles, et leur point d'intersection coïncide avec le centre du miroir 127 (circulaire dans le cas présent). Chacune des poutres 125, 126 est reliée au miroir 127 par deux bipieds 125A, 125B, 126A et 126B respectivement. Ces bipieds sont avantageusement du type décrit ci-dessus en référence à la figure 3, c'est-à-dire qu'ils sont rigides dans deux directions de l'espace (directions X et Z dans le plan de la figure 3) et souples dans la troisième direction de l'espace (axe Y, sur la figure 2), la rotation étant souple autour du troisième point de fixation (fixation sur le miroir) selon les trois axes de rotation. Ces deux poutres sont disposées dans les directions (X et Y) selon lesquelles on désire modifier respectivement l'astigmatisme et le rayon de courbure du miroir 127. Elles peuvent être soit jointives en leurs milieux respectifs (comme représenté en figure 12), soit séparées.

L'ensemble de poutres 128 représenté en figure 12 comporte essentiellement une partie centrale 129 en forme de « + », réalisée en Cesic, à chacune des extrémités des branches de laquelle est fixée, par exemple par vissage, une section de poutre, respectivement 130 à 133. Les sections de poutres 130 et 133 (orthogonales entre elles) sont directement fixées sur la partie centrale 129, tandis que les sections de poutres 131 et 132 sont fixées à cette partie centrale par l'intermédiaire de cellules de contrôle de longueur 134, 135 respectivement. La cellule 134 contrôle par exemple l'astigmatisme du miroir (non représenté en figure 12) sur lequel est fixé l'ensemble 128, tandis que la cellule 135 contrôle alors le rayon de courbure de ce miroir.

Chaque section de poutre 130 à 133 comporte près de son extrémité libre un bipied isostatique (similaire à ceux décrits ci-dessus en référence à la figure 3), respectivement 130A à 133A. Ces sections de poutres et la partie centrale 129 sont avantageusement toutes réalisées en matériau composite de la façon décrite ci-dessus. Ce mode de réalisation des poutres présente une grande rigidité dans les trois directions X, Y et Z, ce qui peut permettre de se passer de dispositif de gerbage du miroir ainsi équipé lors du lancement du satellite équipé de ce miroir. La fixation de l'ensemble des deux poutres sur le miroir n'est pas purement isostatique, et il faut donc prendre de grandes précautions lors de leur intégration dans un satellite. Toutefois, pour y remédier, on peut ajouter un degré de liberté selon l'axe Z à l'un des dispositifs bipieds.

Un mode de réalisation possible du dispositif de contrôle de longueur des poutres du dispositif de l'invention est, comme précisé ci-dessus, du type thermique, le matériau constituant les poutres étant le même que celui du miroir, ceci en vue d'éviter les élongations différentielles des poutres lors de la descente en température entre la température ambiante et la température cryogénique d'utilisation dans l'espace. Cependant, cet avantage est limité du fait que le coefficient de dilatation thermique du Cesic est quasi nul entre 20K et 100K, ce qui conduit à augmenter de façon non négligeable la température générale des poutres. Une telle augmentation de température pourrait entraîner l'arrivée d'un flux thermique élevé sur le miroir ainsi qu'un fort gradient thermique entre le dispositif de contrôle à poutres et le miroir, ce qui entraînerait à son tour un gradient de température local dans le miroir. Le système tel que décrit ci-dessus pourrait aussi ne fonctionner que selon une seule direction (élongation d'une seule poutre), ce qui se présente comme un inconvénient lorsque l'on cherche à créer de l'astigmatisme et une modification de rayon de courbure dans des directions opposées, ce qui est le cas lorsque l'on se déplace sur une parabole virtuelle.

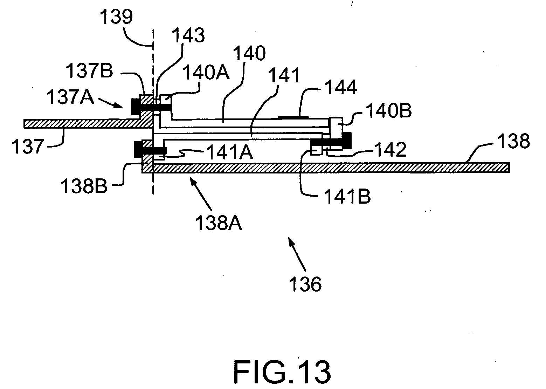

D'autres modes de réalisation, décrits ci-dessous en référence aux figures 13 à 15, permettent d'éliminer de tels inconvénients d'origine thermique. Ces modes de réalisation présentent en commun à la fois l'avantage d'un concept « athermique » (déformation différentielle nulle lorsque le miroir et le dispositif de contrôle à poutres sont refroidis de 300K à 40K environ) et la possibilité de commander l'élongation ou la contraction des poutres à l'aide d'un simple système à commande thermique.

Ces autres modes de réalisation ont en commun l'insertion entre deux parties d'une poutre interrompue en un endroit approprié (par exemple au niveau des dispositifs 134 et 135 comme représenté en figure 12) d'une cellule de compensation. Cette cellule de compensation a une forme générale en « U » à deux branches parallèles entre elles et parallèles aux deux parties de la poutre, ce qui fait que la longueur totale de la poutre ne varie pas lorsqu'elle subit des variations thermiques de son environnement (en particulier lors de son refroidissement de 300K à 40K). On obtient des variations de longueur de la poutre en ne chauffant (ou en ne refroidissant) qu'une seule branche de la cellule de compensation. Les deux branches de cette cellule de compensation sont par exemple en un métal tel que l'aluminium 7075, qui présente l'avantage d'avoir un coefficient de dilatation thermique non négligeable à des températures aussi basses que 40K (de l'ordre de 2,5. 10⁻⁶ m/m°C). Dans cet exemple, si on chauffe une branche d'une longueur de 200 mm pour en augmenter la température d'environ 1°C, on obtient une élongation de 0,5 µm de cette branche, et donc de la longueur totale de la poutre.

La cellule de compensation 136 schématisée en figure 13 est insérée entre deux parties 137, 138 d'une poutre en Cesic sans en modifier la longueur totale, par exemple comme représenté en figure 12. Les extrémités 137A, 138A de ces deux parties de poutre, sur lesquelles est fixée la cellule en « U », sont disposées l'une en dessous de l'autre et aboutissent dans un même plan, dont la trace 139 a été représentée sur la figure. Chacune des deux branches 140, 141 de la cellule de compensation se termine par un court appendice de fixation, respectivement 140A, 140B, 141A, 141B perpendiculaire à la branche correspondante. De même, les deux extrémités 137A, 138A des deux parties de la poutre se terminent par des appendices de fixation 137B, 138B qui leur sont perpendiculaires. Les deux branches 140, 141 sont reliées entre elles par leurs appendices 140B, 141B pour former ledit « U », et elles sont respectivement reliées aux appendices 137B, 138B par leurs appendices 140A, 141A à l'aide de vis, avec interposition de rondelles thermiquement isolantes 142 (entre 140B et 141B) et 143 (entre 137B et 140A). Ces rondelles thermiquement isolantes sont avantageusement en zirconium. Un dispositif de chauffage approprié 144 est disposé sur l'une des deux branches du « U », par exemple sur la branche 140, comme représenté sur le dessin.

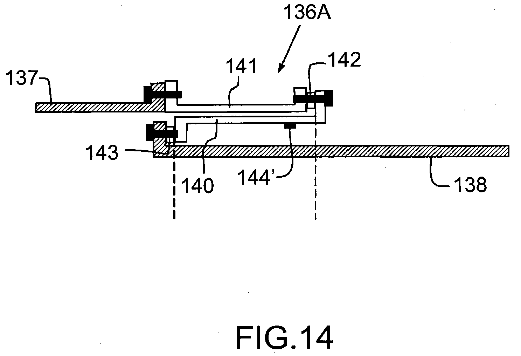

On a représenté en figure 14 une variante 136A du dispositif 136 de la figure 13. Les éléments similaires à ceux du dispositif de la figure 13 sont affectés des mêmes références numériques. La différence essentielle entre ces deux dispositifs réside dans l'emplacement du dispositif de chauffage 144', qui est disposé maintenant sur la branche 141', et non plus sur la branche 140' (dans cet exemple, la position des branches 140 et 141 est inversée par rapport à celle de la figure 13). En conséquence, les rondelles thermiquement isolantes 142 et 143 sont disposées à la jonction des deux branches 140 et 141 et entre la branche 141 et la partie de poutre 138.

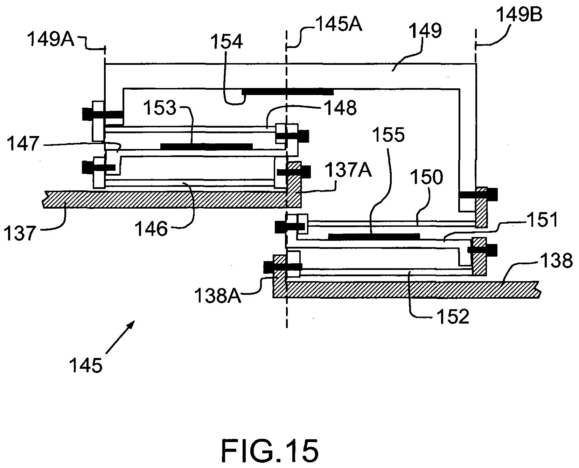

Ces deux modes de réalisation des figures 13 et 14 présentent une limitation de fonctionnement en température du fait de la forte transmission thermique via les rondelles 142, 143 entre la partie chauffée et les parties non chauffées. Lorsque l'on doit obtenir des contractions ou des élongations de grande amplitude (par exemple supérieures à plusieurs µm, comme c'est le cas pour des applications d'imagerie), il faut, bien entendu, chauffer ou refroidir fortement la branche correspondante du « U », cet important apport thermique se propage vers les poutres et ensuite vers le miroir, malgré les rondelles isolantes. Le mode de réalisation de la figure 15 permet d'éviter cet inconvénient grâce à l'ajout de lames en fibre de verre comme décrit ci-dessous.

La cellule de compensation 145 de la figure 15 est intercalée entre les deux parties de poutre 137, 138. Les faces des appendices 137A et 138A sur lesquelles est fixée la cellule de compensation 145 sont situées dans un même plan (perpendiculaire au plan du dessin) dont la trace 145A est représentée sur la figure.

La cellule 145 comporte, dans l'ordre, depuis la partie 137 jusqu'à la partie 138, une lame 146 en fibre de verre, une lame 147 en aluminium, une autre lame 148 en fibre de verre, une barre 149 en aluminium, une lame 150 en fibre de verre, une lame 151 en aluminium et une lame 152 en fibre de verre. La barre 149 a une longueur sensiblement double de celle des lames 146 à 148 et 150 à 152, et les faces de ses extrémités sur lesquelles sont fixées les lames 148 et 150 sont situées dans de plans parallèles entre eux et perpendiculaires au plan du dessin, et leurs traces respectives sont référencées 149A et 149B respectivement. Les lames 146 à 148 sont parallèles entre elles, sont disposées les unes au-dessus des autres, et ont des longueurs telles que leurs faces de fixation respectives sont alternativement situées dans les plans passant par les traces 145A et 149A. De même, les lames 150 à 152 sont parallèles entre elles, sont disposées les unes au-dessus des autres, et ont des longueurs telles que leurs faces de fixation respectives sont alternativement situées dans les plans passant par les traces 149B et 145A. Ce dispositif ne comporte aucune rondelle d'isolation thermique aux jonctions entre les différents éléments 137, 138 et 146 à 152. Des dispositifs de contrôle thermique 153, 154 et 155 sont fixés sur les éléments 147, 149 et 151 respectivement. L'aluminium et la fibre de verre sont cités ci-dessus à titre d'exemple, mais il est bien entendu que des matériaux présentant des qualités mécaniques et thermiques similaires peuvent être utilisés à leur place.

Le dispositif 145 ainsi réalisé présente l'avantage de pouvoir être utilisé sur une large gamme de températures environnantes (par exemple 20 à 300K) sans déplacer les faces de fixation des appendices 137A et 138A par rapport au plan passant par la trace 145A lorsque seule la température ambiante varie, c'est-à-dire sans agir sur le miroir sur lequel il est disposé.

## Revendications

1. Dispositif de modification de forme d'une surface optique circulaire, **caractérisé en ce qu'**il comporte au moins un élément à longueur pilotable (2), des moyens de contrôle (4) de la longueur de cet élément, cet élément étant relié à la surface optique (1) par ses extrémités en des zones (24) diamétralement opposées et proches de la périphérie de cette surface optique, la liaison entre l'élément à longueur pilotable et la surface optique comportant des fixations (31) rigides selon l'axe joignant ces deux zones de fixation et flexibles selon les autres degrés de liberté, les moyens de contrôle comportent une cellule de compensation de variation de longueur de poutre due à des variations de température ambiante, cette cellule comportant deux branches (140, 141) formant un « U », les moyens de contrôle de longueur (144) étant disposés sur l'une d'elles, ces branches étant en un matériau ayant un coefficient de dilatation thermique non négligeable à des températures aussi basses que 40K permettant d'obtenir des variations de longueur de la poutre en ne chauffant on en ne refroidissant qu'une seule branche de la cellule de compensation.

2. Dispositif de modification selon la revendication 1, **caractérisé en ce que** les moyens de contrôle comportent une cellule (145) de compensation de variation de longueur de poutre due à des variations de température ambiante, cette cellule étant insérée entre deux parties de l'élément à longueur pilotable (137, 138) et comportant sept branches disposées en méandres les unes à la suite des autres (146 à 152) de façon à ne pas modifier la longueur totale de l'élément à longueur pilotable, ces branches étant alternativement en un matériau du type aluminium et en fibre de verre.

3. Dispositif de modification selon l'une des revendications 1 ou 2, **caractérisé en ce que** l'élément à longueur pilotable est constitué d'au moins deux demi-poutres (21) sensiblement identiques et que les moyens de contrôle comportent un ensemble mécanique ou thermo élastique à longueur commandée réunissant les deux demi-poutres et des moyens de commande de la longueur de l'ensemble mécanique.

4. Dispositif de modification selon la revendication 3, **caractérisé en ce que** lesdits moyens de commande sont des dispositifs piézoélectriques (43) ou thermo élastiques.

5. Dispositif de modification selon la revendication 3 ou 4, **caractérisé en ce que** l'ensemble mécanique comporte un pantographe mécanique (41) à quatre sommets réalisé au moyen de quatre lames identiques (42), le premier sommet relié à la première demi-poutre, le troisième sommet à la seconde demi-poutre, les second et quatrième sommets reliés à un dispositif piézoélectrique (43).

6. Dispositif de modification selon la revendication 5, **caractérisé en ce que** l'ensemble mécanique comporte quatre pantographes (41) identiques parallèles entre eux reliés aux deux demi-poutres (21).

7. Dispositif de modification selon l'une des revendications précédentes, **caractérisé en ce que** la liaison entre l'élément à longueur pilotable et la surface optique comporte des bipieds comprenant deux lames flexibles (31) disposées en forme de A constituant une structure dite « A-frame », les lames étant solidaires d'une part de la poutre et d'autre part de la face arrière de la surface optique.

8. Dispositif de modification selon l'une des revendications 1 à 4, **caractérisé en ce qu'**il est appliqué à un miroir et qu'il comporte également, afin de piloter de façon indépendante l'astigmatisme du miroir et son le rayon de courbure une seconde poutre (130 à 133, 138) située à 90° de la première et dont la longueur est modifiée de manière indépendante de celle de la première (129,137), les deux poutres étant soit reliées en leur centre soit libres entre elles.

9. Dispositif de modification selon l'une des revendications 1 à 4, **caractérisé en ce qu'**il est appliqué à un miroir et qu'il comporte également, afin de piloter de façon indépendante l'astigmatisme du miroir sans modifier le rayon de courbure et, une structure mécanique composée de quatre poutres (22) sensiblement identiques disposées en parallélogramme et reliées entre elles par des articulations (23), deux des sommets du parallélogramme étant solidaires des extrémités de la poutre, les deux autres sommets étant solidaires de la face arrière du miroir par deux pivots (24).

10. Dispositif de modification selon l'une des revendications précédentes, **caractérisé en ce que** l'élément à longueur pilotable est réalisé dans le même matériau que la surface optique.

11. Dispositif de modification selon la revendication 10, **caractérisé en ce que** ledit matériau est l'un des matériaux suivants : une structure composite matricielle connue sous la marque « Cesic^{®} » ou du verre, de la céramique, un matériau métallique ou composite.

12. Dispositif de modification selon l'une des revendications 7 à 11, **caractérisé en ce que** les bipieds (31), les articulations (23) et les pivots (24) sont réalisés en Invar.

13. Miroir de télescope, **caractérisé en ce qu'**il comporte un dispositif de modification selon l'une des revendications précédentes et que ce dispositif agit sur l'astigmatisme et/ou le rayon de courbure de ce miroir.

## Patentansprüche

1. Vorrichtung zum Modifizieren der Form einer kreisförmigen optischen Fläche, **dadurch gekennzeichnet, dass** sie Folgendes umfasst: wenigstens ein Element (2) mit regelbarer Länge, Mittel (4) zum Regeln der Länge dieses Elements, wobei dieses Element mit der optischen Fläche (1) an seinen Enden in diametral gegenüberliegenden und nahe an der Peripherie der optischen Fläche befindlichen Zonen (24) verbunden ist, wobei die Verbindung zwischen dem Element mit regelbarer Länge und der optischen Fläche Befestigungen (31) umfasst, die entlang der diese beiden Befestigungszonen verbindenden Achse starr und entlang den anderen Freiheitsgraden flexibel sind, wobei die Regelmittel eine Zelle zum Kompensieren der Balkenlängenvariation aufgrund von Umgebungstemperaturvauationen umfassen, wobei diese Zelle zwei ein U bildende Zweige (140, 141) umfasst, auf einem von denen die Längenregelmittel (144) angeordnet sind, wobei diese Zweige aus einem Material mit einem erheblichen Wäimeausdehnungskoeffizient bei Temperaturen bis 40°K bestehen, so dass Längenvariationen des Balkens durch Erhitzen oder Kühlen von nur einem Zweig der Kompensationszelle erzielt werden können.

2. Modifikationsvorrichtung nach Anspruch 1, **dadurch gekennzeichnet, dass** die Regelmittel eine Zelle (145) zum Kompensieren von Balkenlängenvariationen aufgrund von Umgebungstemperaturvariationen umfassen, wobei diese Zelle zwischen zwei Teilen des Elements (137, 138) mit regelbarer Länge eingefügt ist und sieben Zweige (146 bis 152) umfasst, die meanderföimig hintereinander angeordnet sind, um die Gesamtlänge des Elements mit regelbarer Länge nicht zu modifizieren, wobei die Zweige abwechselnd aus einem Material des Aluminiumtyps und aus Glasfaser bestehen.

3. Modifikationsvorrichtung nach Anspruch 1 oder 2, **dadurch gekennzeichnet, dass** das Element mit regelbarer Länge aus wenigstens zwei im Wesentlichen identischen halben Balken (21) besteht, und dadurch, dass die Regelmittel eine mechanische oder thermoelastische Baugruppe mit regelbarer Länge, die die beiden halben Balken verbindet, und Mittel zum Regeln der Länge der mechanischen Baugruppe umfassen.

4. Modifikationsvorrichtung nach Anspruch 3, **dadurch gekennzeichnet, dass** die Regelmittel piezoelektrische (43) oder thermoelastische Vorrichtungen sind.

5. Modifikationsvorrichtung nach Anspruch 3 oder 4, **dadurch gekennzeichnet, dass** die mechanische Baugruppe einen mechanischen Pantograph (41) mit vier Scheitelpunkten umfasst, erzeugt mit vier identischen Lamellen (42), wobei der erste Scheitelpunkt mit dem ersten halben Balken verbunden ist, der dritte Scheitelpunkt mit dem zweiten halben Balken verbunden ist, der zweite und vierte Scheitelpunkt mit einer piezoelektrischen Vorrichtung (43) verbunden sind.

6. Modifikationsvorrichtung nach Anspruch 5, **dadurch gekennzeichnet, dass** die mechanische Baugruppe vier identische Pantographen (41), die parallel zueinander mit zwei halben Balken (21) verbunden sind, umfasst.

7. Modifikationsvorrichtung nach einem der vorherigen Ansprüche, **dadurch gekennzeichnet, dass** die Verbindung zwischen dem Element mit regelbarer Länge und der optischen Fläche Zweibeine umfasst, die zwei flexible Lamellen (31) umfassen, die in Form eines "A" angeordnet sind und eine "A-Rahmen"-Struktur bilden, wobei die Lamellen einerseits fest mit dem Balken und andererseits fest mit der Rückseite der optischen Fläche verbunden sind.

8. Modifikationsvorrichtung nach einem der Ansprüche 1 bis 4, **dadurch gekennzeichnet, dass** sie auf einen Spiegel aufgebracht ist und ferner, zum unabhängigen Regeln des Astigmatismus des Spiegels und seines Krümmungsradius, einen zweiten Balken (130 bis 133, 138) umfasst, der sich 90° vom ersten Balken befindet und dessen Länge unabhängig von der des ersten Balkens (129, 137) modifiziert wird, wobei die beiden Balken in ihrer Mitte miteinander verbunden oder frei voneinander sind.

9. Modifikationsvorrichtung nach einem der Ansprüche 1 bis 4, **dadurch gekennzeichnet, dass** sie auf einen Spiegel aufgebracht ist und dass sie ferner, zum unabhängigen Regeln des Astigmatismus des Spiegels, ohne den Krümmungsradius zu modifizieren, eine mechanische Struktur umfasst, die aus vier im Wesentlichen identischen Balken (22) zusammengesetzt ist, die zu einem Parallelogramm angeordnet und durch Gelenke (23) miteinander verbunden sind, wobei zwei der Scheitelpunkte des Parallelogramms fest mit den Enden des Balkens und die beiden anderen Scheitelpunkte fest mit der Rückseite des Spiegels über zwei Drehpunkte (24) verbunden sind.

10. Modifikationsvorrichtung nach einem der vorherigen Ansprüche, **dadurch gekennzeichnet, dass** das Element mit regelbarer Länge aus demselben Material gefertigt ist wie die optische Fläche.

11. Modifikationsvorrichtung nach Anspruch 10, **dadurch gekennzeichnet, dass** das Material eines der folgenden Materialien ist: eine Matrixverbundstruktur, bekannt under der Marke "Cesic®", oder Glas, Keramik, ein metallisches Material oder ein Verbundstoff.

12. Modifikationsvorrichtung nach einem der Ansprüche 7 bis 11, **dadurch gekennzeichnet, dass** die Zweibeine (31), die Gelenke (23) und die Drehpunkte (24) aus Invar bestehen.

13. Teleskopspiegel, **dadurch gekennzeichnet, dass** er eine Modifikationsvorrichtung nach einem der vorherigen Ansprüche umfasst, und dadurch, dass diese Vorrichtung auf den Astigmatismus und/oder den Krümmungsradius des Spiegels wirkt.

## Claims

1. A device for modifying the shape of a circular optical surface, **characterised in that** it comprises at least one controllable-length element (2), means (4) for controlling the length of said element, said element being connected to said optical surface (1) via its ends at zones (24) that are diametrically opposite and are close to the periphery of said optical surface, the connection between said controllable-length element and said optical surface comprising attachments (31) that are rigid along the axis joining these two attachment zones and are flexible along the other degrees of freedom, said control means comprise a cell for compensating for beam length variation due to variations in the ambient temperature, said cell comprising two branches (140, 141) forming a U-shape, the means (144) for controlling the length being disposed on one of said branches, said branches being made of a material having a significant thermal expansion coefficient at temperatures as low as 40 K, allowing variations in the length of the beam to be obtained by heating or by cooling only one branch of said compensation cell.

2. The modification device according to claim 1, **characterised in that** said control means comprise a cell (145) for compensating for beam length variation due to variations in the ambient temperature, said cell being inserted between two parts of the controllable-length element (137, 138) and comprising seven branches (146 to 152) disposed in a meandering manner one after the other so as not to modify the total length of said controllable-length element, said branches being alternately made of a material of the aluminium type and of glass fibre.

3. The modification device according to any one of claims 1 to 2, **characterised in that** said controllable-length element is made up of at least two substantially identical half-beams (21) and **in that** said control means comprise a controllable-length mechanical or thermo-elastic assembly joining said two half-beams and means for controlling the length of said mechanical assembly.

4. The modification device according to claim 3, **characterised in that** said control means are piezoelectric (43) or thermo-elastic devices.

5. The modification device according to any one of claims 3 to 4, **characterised in that** said mechanical assembly comprises a mechanical pantograph (41) with four vertices produced by means of four identical strips (42), said first vertex being connected to the first half-beam, the third vertex being connected to the second half-beam, the second and fourth vertices being connected to a piezoelectric device (43).

6. The modification device according to claim 5, **characterised in that** said mechanical assembly comprises four identical pantographs (41) parallel to each other connected to said two half-beams (21).

7. The modification device according to any one of the preceding claims, **characterised in that** the connection between said controllable-length element and said optical surface comprises bipods comprising two flexible strips (31) disposed in the shape of an "A", forming an "A-frame" structure, with said strips being, on the one hand, integral with said beam and, on the other hand, being integral with the rear face of said optical surface.

8. The modification device according to any one of claims 1 to 4, **characterised in that** it is applied to a mirror and that it further comprises, in order to independently control the astigmatism of said mirror and its radius of curvature, a second beam (130 to 133, 138), which is located 90° from said first beam and the length of which is modified independently of that of said first beam (129, 137), said two beams being either connected at their centre or being free from each other.

9. The modification device according to any one of claims 1 to 4, **characterised in that** it is applied to a mirror and that it further comprises, in order to independently control the astigmatism of said mirror without modifying the radius of curvature, a mechanical structure that is made up of four substantially identical beams (22) disposed as a parallelogram and connected together by articulations (23), with two of the vertices of the parallelogram being integral with the ends of said beam, the other two vertices being integral with the rear face of the mirror via two pivots (24).

10. The modification device according to any one of the preceding claims, **characterised in that** said controllable-length element is produced from the same material as said optical surface.

11. The modification device according to claim 10, **characterised in that** said material is one of the following materials: a matrix composite structure known under the trade name "Cesic®" or glass, ceramic, a metallic material or a composite material.

12. The modification device according to any one of claims 7 to 11, **characterised in that** said bipods (31), said articulations (23) and said pivots (24) are made of Invar.

13. A telescope mirror, **characterised in that** it comprises a modification device according to any one of the preceding claims and **in that** said device acts on the astigmatism and/or the radius of curvature of said mirror.
